# EUROPEAN PATENT SPECIFICATION

(11) **EP 1 940 091 B1**
(45) Date of publication and mention of the grant of the patent: **07.10.2009**
(21) Application number: 07123022.1
(22) Date of filing: 12.12.2007
(51) Int. Cl.: H04L 12/56

(54) **Autonomous network, node device, network redundancy method and recording medium**
Autonomes Netzwerk, Netzknotenvorrichtung, Netzwerkredundanzverfahren und Aufzeichnungsmittel
Réseau autonome, dispositif de noeud, procédé de redondance de réseau et support d'enregistrement

(30) Priority: 27.12.2006 JP 2006350807; 21.11.2007 JP 2007302153
(43) Date of publication of application: 02.07.2008
(73) Proprietor: NEC CORPORATION, Tokyo (JP)
(72) Inventor: Ozaki, Hirokazu, Tokyo (JP)
(74) Representative: Betten & Resch

(56) References cited:
- EP-A- 1 715 651
- WO-A-20/06013191
- DE-A1- 19 928 484
- US-A1- 2003 110 409

## Description

This application is based upon and claims the benefit of priority from Japanese patent application No. 2006-350807, filed on December 27, 2006..

### BACKGROUND OF THE INVENTION

### Field of the Invention

The present invention pertains to an autonomous network, a node device, a network redundancy method, and a recording medium, and in particular, to an autonomous network, a node device, a network redundancy method, and a recording medium capable of coping with occurrence of failure on a network.

### Description of the Related Art

The internet is being increasingly arranged as social infrastructure, and attention has been drawn to improvement in reliability thereof as an important issue. Particularly, at occurrence of network failure, it is essential to quickly restore the failure. Various methods have been proposed to recover failure on a transmission path such as disconnection of an optical fiber line and failure in a node such as failure in a router or a switch.

In general, there is employed a method of providing redundancy to devices and transmission paths, the method being simple and being capable of quickly and securely restore the failure. Specifically, there have been known, for example, Automatic Protection Switching (APS) of Synchronous Digital Hierarchy (SDH)/Synchronous Optical NETwork (SONET) and Link Aggregation of Ethernet (registered trademark) which are used as standards in the world (ITU-T standard G. 841; IEEE802. 3ad). To provide redundancy to devices, it is also possible to employ a method to duplicate, for example, a main signal section and a control section.

However, due to the redundancy, the device and the network are increased in size and cost, and hence the redundancy is partially provided in actual cases. Inherently, the internet is a set of a large number of networks and is basically configured according to a topology of mesh structure. That is, the internet has intrinsically redundant structure.

Therefore, it is rather favorable in consideration of cost merit or cost effectiveness to employ a failure recovering method in which at occurrence of failure, the packet path is changed to detour the point of the failure. However, to carry out the above method, it is required for a pertinent node to again calculate the path on the basis of information of the failure to determine a new route for the packet.

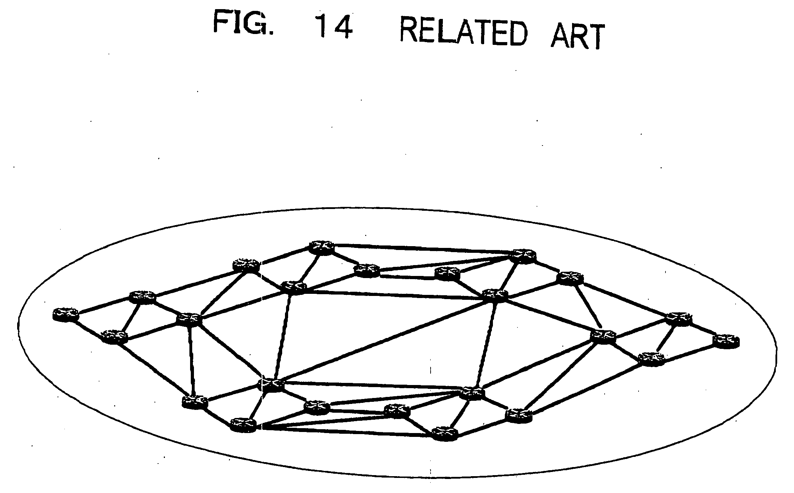

In the internet, a plurality of autonomous systems is mutually connected. In each autonomous system, there is basically disposed one organization for the operation and management of the system, and the same routing protocol is shared in the network. FIG. 14 shows an example of structure of an existing autonomous network.

As a routing protocol in the autonomous network (Interior Gateway Protocol (IGP)), there are representatively adopted, for example, Routing Information Protocol (RIP), Open Shortest Path First (OSPF; RFC2328), Intermediate System to Intermediate System (IS-IS), which have been broadly employed in the world.

These protocols are called routing protocol of link state type to determine a path as follows. A weight called "cost" is manually set in advance to each link going into or out of a node. Generally, the cost is set in inverse proportion to transmission capacity of the link in many cases.

Each node periodically broadcasts ("flooding") the state and the cost of each link coupled with the node. As a result, all nodes share information of the network topology. Each node determines a path to an associated node to obtain the minimum path or route cost. To calculate the route, a calculation method, called Dijkstra's algorithm is employed in many cases.

The calculation gives a set of links called a tree, i.e., a shortest path tree or a spanning tree. The tree is a set including a minimum number of links to couple the nodes to each other. On the basis of information of the tree, each node updates a routing table and then a forwarding table. For convenience of the system configuration, the routing table is stored in a control section and the forwarding table is stored in each interface section in many cases.

In ordinary situations, the collection and notification of the information, the path calculation, and the setting thereof are periodically managed by software.

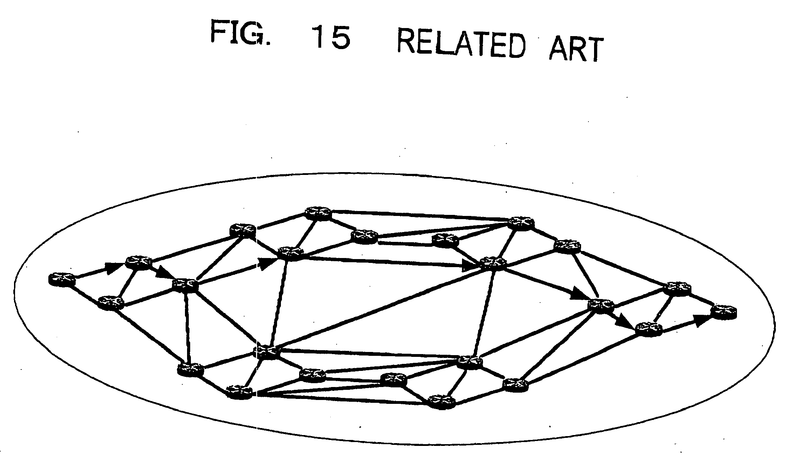

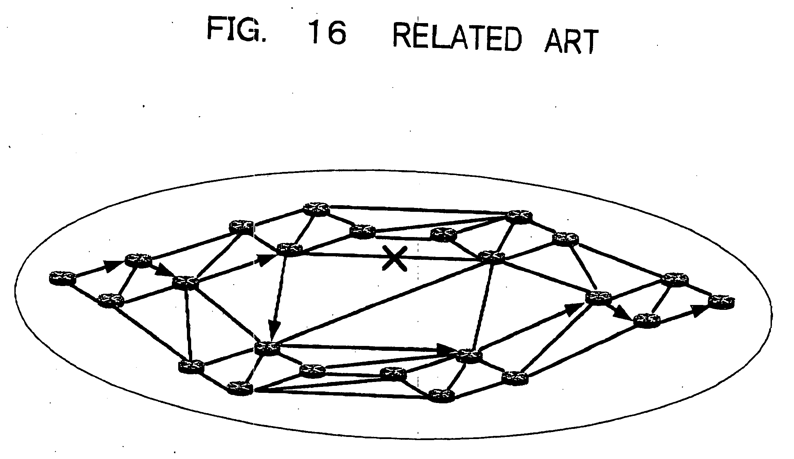

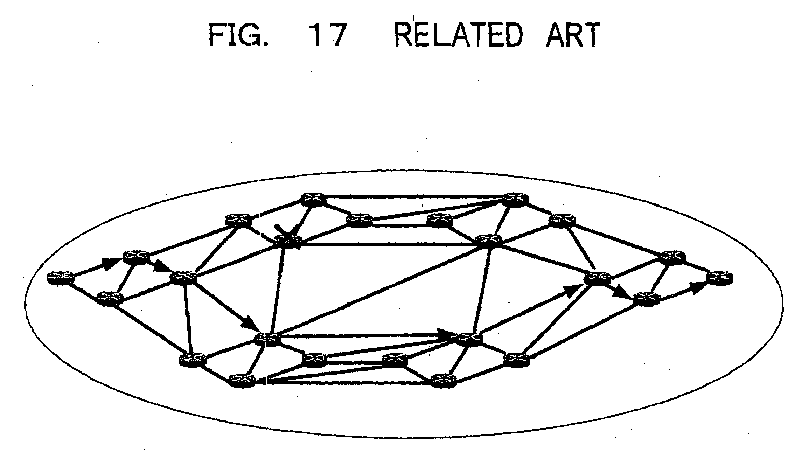

FIGS. 15 to 17 schematically show states of the routing on an existing network. FIG. 15 shows a state of the routing without failure in which a transmission path is indicated using arrows. FIG. 16 shows a state in which due to failure on a link, a detour is formed by the routing. FIG. 17 shows a state wherein a detour is configured by the routing due to failure in a node.

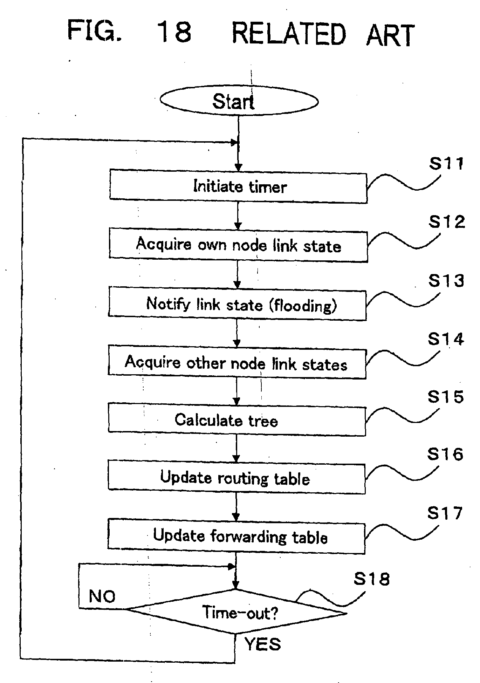

FIG. 18 shows a processing flow of an existing routing protocol. According to the existing routing protocol, each time a timer operating with a fixed period indicates a state of time-out, there is repeatedly executed a sequence of processing including initiation of the timer (S11), acquisition of own node link state (S12), notification of the link state (flooding; S13), acquisition of other node link states (S14), tree calculation (S15), routing table update (S16), and forwarding table update (S17).

The time required to update the path varies depending on the period set to the timer and ordinarily ranges from several seconds to several hundreds of seconds. The processing flow of FIG. 18 shows simplified processing steps. In an actual operation, if failure occurs or if the topology changes, the system also carries out the notification and the path re-calculation.

In the above routing protocol, to prevent increase in the load imposed upon the network due to excessive control information items, a minimum interval between flooding operations is prescribed. During the interval, even if failure is detected, the condition cannot be notified. According to OSPF, the minimum interval is five seconds. In the flowchart shown in FIG. 18, the process is periodically executed by use of the timer also in consideration of the minimum flooding interval.

According to the existing routing protocol, if a short period of time is set to the timer, the recovery takes a shorter period of time at failure. However, the flooding of control information is more frequently accomplished. This increases the load upon the network and hence adversely influences transfer of a main signal packet. In consideration of trade-off therebetween, the period of time is set to the timer. If failure takes place at a location, any packet to be passed through the location is discarded and a state of signal disconnection continues until the next path update is conducted. In this regard, a method of possibly shortening the period of time of signal disconnection is described in pages 142 to 149 of "IP Resilience within an Autonomous System: Current Approaches, Challenges, and Future Directions" (IEEE Communications Magazine October 2005) written by S. Rai et al.

According to a method described in "Towards Millisecond IGP Convergence" (IETF Internet Draft 2000) written by C. Alaettinoglu et al., the path update period is reduced to carry out the path re calculation at a higher speed. However, since the information flooding is frequently accomplished as described above, excessive load is imposed upon the network. Moreover, the path re-calculation is conducted in all nodes also for local failure, which increases the load upon the software in each node.

According "Proactive vs Reactive Approach to Failure Resilient Routing" (Proc. INFOCOM, Mar. 2004) written by S. Lee et al. and "Improving Service Availability During Link Failure Transients through Alternate Routing" (Texas A&M Univ., Tech. rep. TAMUECE-2003-02, Feb. 2003) written by S. Vellanki et al, there is provided a method in which a backup path is beforehand calculated for occurrence of failure. However, to cope with all cases of failure, the amount of calculation steps increase, and it is hence difficult to actually carry out this method. In addition, there currently exists no effective method to cope with occurrence of failure at a plurality of locations in the network.

DE 199 28 484 A1 discloses a method and device for controlling data transmission in a duplicated transmission network comprising two networks having an identical structure, wherein each network comprises at least one node, which is connected to one of the networks and to a respective node of the other network and which decides to transmit a package to the connected one of the networks or to the respective node of the other network.

US 2003/0110409 A1 discloses a fault router method and system for use in a parallel redundant network environment, wherein a first and a second network machine are connected to each of the redundant networks each having a routing table. The method comprises the steps of: selecting one of the parallel redundant networks as a primary pathway for communicating, detecting a fault in the connection and notifying the network machines and the fault router to modify their routing tables to indicate that redundant network not selected in the above step is the new primary pathway for communicating.

### SUMMARY OF THE INVENTION

An exemplary object of the invention is to provide an autonomous network, a node device, a network redundancy method, and a recording medium capable of restoring communication in a short period of time at occurrence of failure.

To achieve the object, the present invention has aspects as follows. The present invention is defined in the independent claims. The dependent claims form embodiments of the invention.

### BRIEF DESCRIPTION OF THE DRAWINGS

The objects and features of the present invention will become more apparent from the consideration of the following detailed description taken in conjunction with the accompanying drawings in which:
FIG. 1 is a schematic block diagram showing an example of structure of an autonomous network of an exemplary embodiment;
FIG. 2 is a block diagram showing software mounting positions;
FIG. 3 is a first diagram showing an outline of a first operation;
FIG. 4 is a second diagram showing the outline of the first operation;
FIG. 5 is a third diagram showing the outline of the first operation;
FIG. 6 is a fourth showing the outline of the first operation;
FIG. 7 is a fifth diagram showing the outline of the first operation;
FIG. 8 is a first diagram showing an outline of a second operation;
FIG. 9 is a second diagram showing the outline of the second operation;
FIG. 10 is a third diagram showing the outline of the second operation;
FIG. 11 is a fourth showing the outline of the second operation;
FIG. 12 is a fifth diagram showing the outline of the second operation;
FIG. 13 is a state transition diagram showing an example of operation of software;
FIG. 14 is a diagram showing an example of structure of an existing autonomous network;
FIG. 15 is a diagram showing an example of routing in the existing autonomous network;
FIG. 16 is a diagram showing an example of routing in the existing autonomous network;
FIG. 17 is a diagram showing an example of routing in the existing autonomous network; and
FIG. 18 is a flowchart showing processing of an existing routing method.

### EXEMPLARY EMBODIMENTS

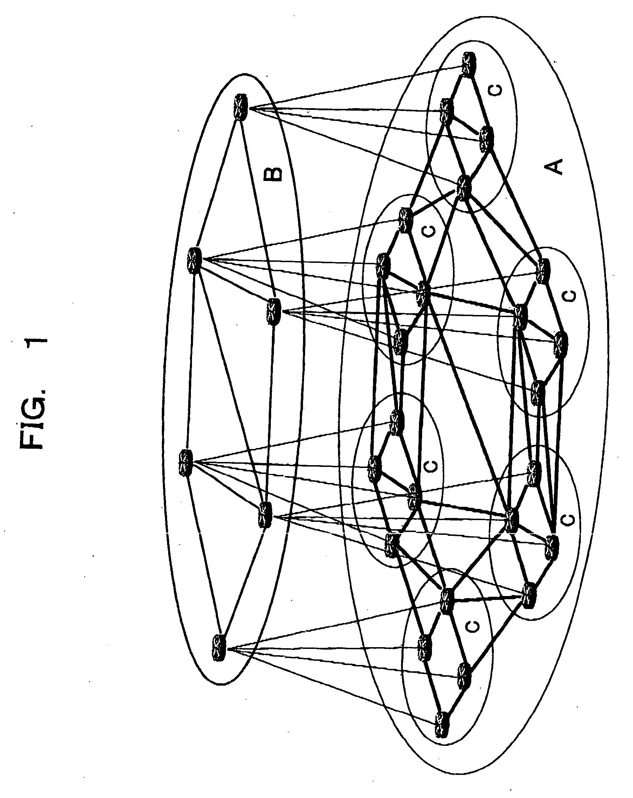

Referring now to FIG. 1, description will be given of an outline of an autonomous network of an exemplary embodiment.

In the exemplary embodiment of the autonomous network, one and the same routing protocol is adopted in the network. The autonomous network is constructed by adding an additional network B which is an autonomous network dedicated to backup routes to an existing network A which is an existing autonomous network to thereby provide redundancy to the resultant network. Part of traffic of network A is processed using network B.

In the exemplary embodiment, since part of the traffic of network A is transmitted via network B, communication can be restored in a short period of time. Referring next to the accompanying drawings, description will be given in detail.

### <Autonomous network configuration>

Referring first to FIG. 1, description will be given of the exemplary embodiment. FIG. 1 shows structure of an autonomous network.

The network includes an existing autonomous network and an autonomous network for backup paths, i.e., an additional network. An existing routing protocol such as RIP, OSPF, and IS-IS may be used.

FIG. 1 includes existing network A and additional network B. Node devices of network A are classified into groups C each of which includes nodes that are geographically close to each other. Each group C is assigned with one node device on network B to establish connection between the node devices on network A and the node devices on network B.

In the exemplary embodiment of the autonomous network, node devices are additionally installed for additional network B. To each node device on network A, an interface card is added to resultantly connect the node devices on network A to the node devices on network B.

The node devices on network B are coupled with each other in the form of a mesh to construct one autonomous system independent of network A. Network B is dedicated to backup routes of network A. On network B, bandwidth of each link and a transfer capacity of each node are lower than those of network A. That is, network B is constructed as a small-sized and inexpensive network.

After the system is configured as shown in FIG. 1, software to control the change-over or switching in a redundant structure is installed in each node device on network A to thereby construct the autonomous network.

### <Node device configuration>

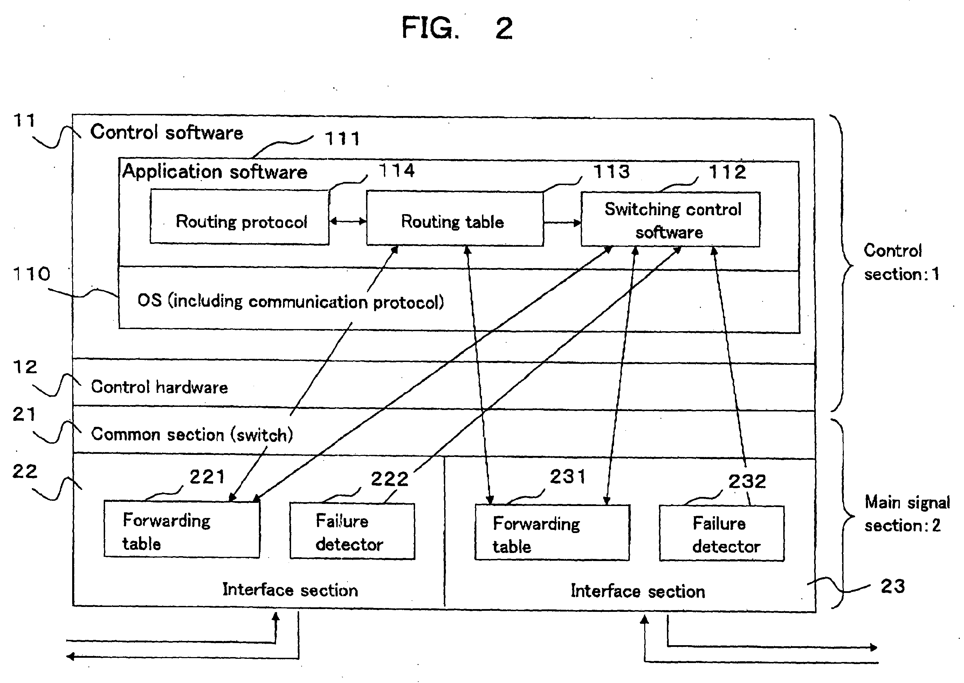

Referring to FIG. 2, description will be given of a configuration of a node device in the exemplary embodiment. FIG. 2 shows locations of software installed in the node device of the exemplary embodiment.

The node device includes a control section 1 and a main signal section 2. The controller 1 includes control software 11 and control hardware 12. The main signal section 2 includes a common section (switch) 21 and interface sections 22 and 23.

The software 11 of the controller 1 includes an Operating System (OS including a communication protocol) 110 and application software 111. The application software 111 includes switching control software 112, a routing table 113, and a routing protocol 114.

The interfaces 22 and 23 respectively include forwarding tables 221 and 231 and failure detecting sections 222 and 232.

The switching control software 112 has a function to refer to a state of failure, a function to refer to the routing table 113, and a function to refer to and to re-write the forwarding tables 221 and 231.

### <Outline of operation in autonomous network>

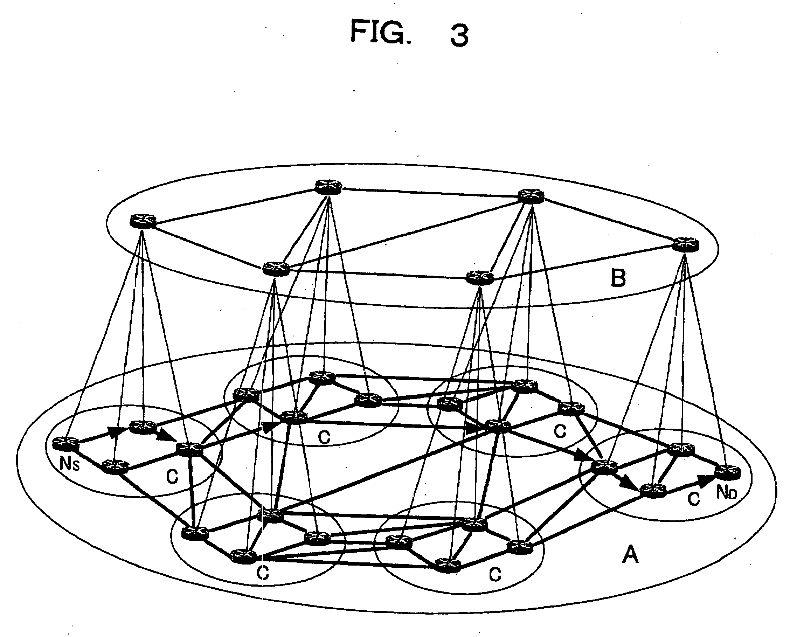

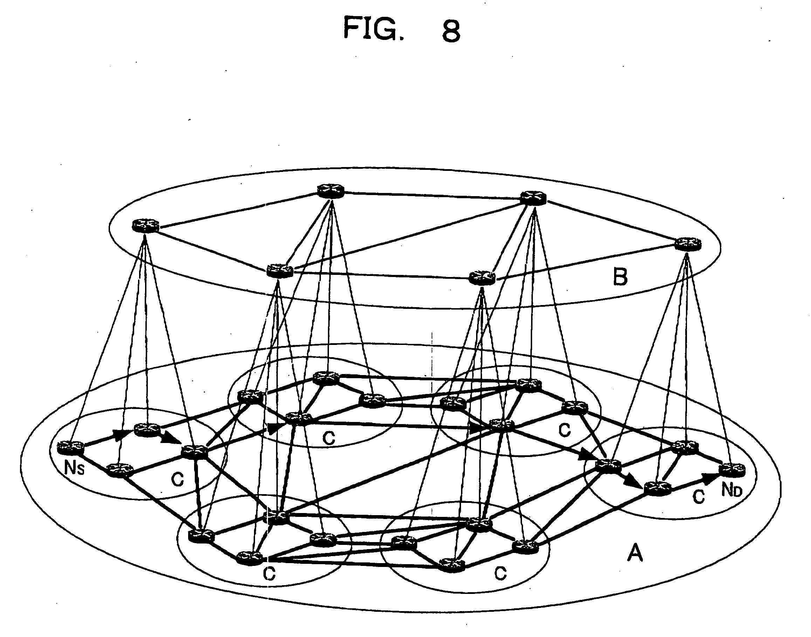

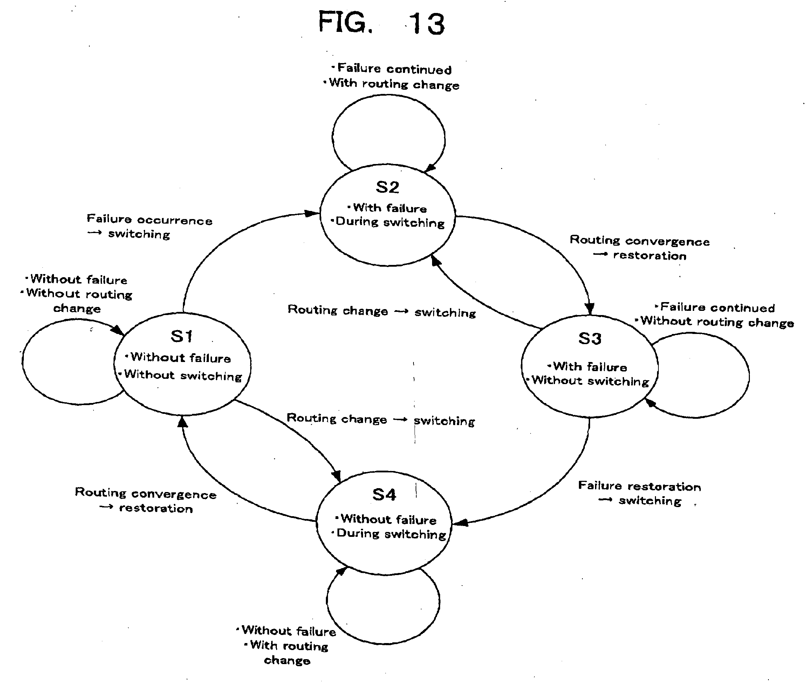

Referring next to FIGS. 1 to 13, description will be given of operation in the autonomous network. FIGS. 3 to 7 show an outline of a first operation in the network. FIGS. 8 to 12 show an outline of a second operation in the network. FIG. 13 is a state transition diagram showing operation of software.

FIG. 3 shows an ordinary state of the network wherein no failure exists in network A. In this situation, routing protocols operate respectively in networks A and B independently. Although routing information is not communicated between networks A and B, the node devices on network B mutually communicate routing information including an address associated therewith, i.e., an address of a node device on network A.

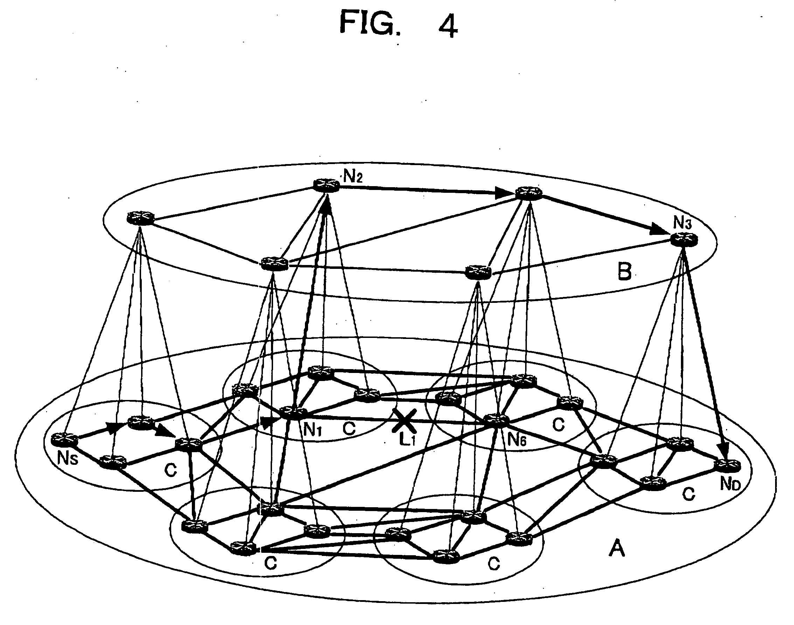

The path from node NS to node ND is calculated on the basis of information exchanged according to an existing routing protocol. This results in a path indicated by arrows in FIG. 3. FIG. 4 shows operation to be carried out when failure occurs on an intermediate link of the path shown in FIG. 3.

As FIG. 4 shows, if link L1 from node N1 to node N6 is disconnected, node N1 immediately detects the failure by receiving an alarm, e.g., "Remote Detect Indication (RDI) of SDH/SONET" transferred from opposing node N6, and then delivers a packet, which is originally sent to node N6, to node N2 on network B.

Node N2 transfers the packet from node N1 to node N3 on network B. Node N3 feeds the packet received from node N2 to node ND on network A. As above, if failure occurs on a link at an intermediate point of network A, node N1 having detected the failure switches paths to send subsequent packets to network B. The packets are hence delivered via network B to node D as the final destination.

Network A calculates a path to detour link L1 by using the routing protocol. However, the calculation requires a certain amount of time. Therefore, during the calculation period, packets are delivered via network B.

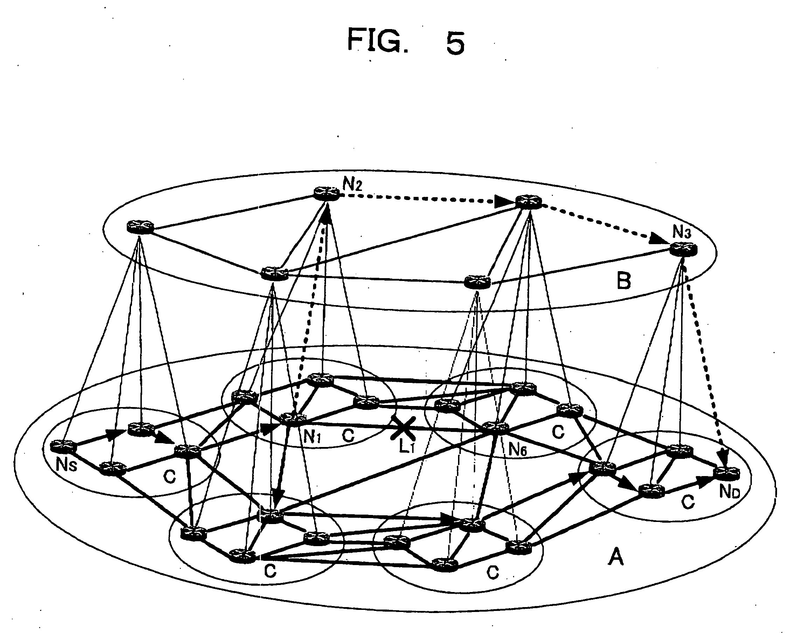

After the path re-calculation is completed and the packet transfer to node ND is possible on network A, the packet transfer via network B is restored to the packet transfer via network A. This is accomplished by node N1. FIG. 5 shows a state after the packet transfer via network B is restored to the packet transfer via network A. In FIG. 5, arrows indicate a new path to detour link L1, i.e., the location of failure.

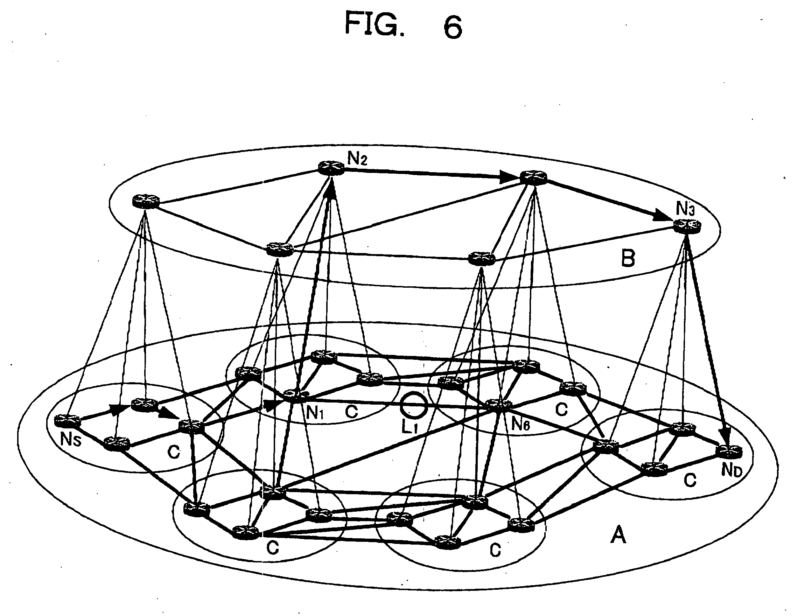

FIG. 6 shows operation achieved when the link failure is restored after the switching of the path. Node N1 having recognized the recovery of failure changes over (switches) the path from network A to network B for the following reason. During the re-calculation of the routing on network A, the path is unstable. Therefore, until the calculation is completed to finally determine the path, packets are delivered via network B as the standby network.

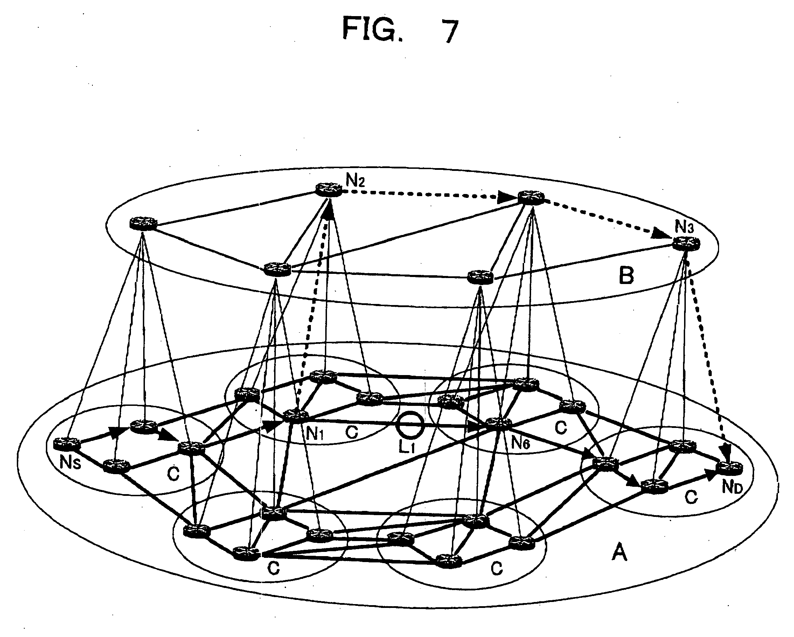

After the routing is converged, node N1 restores the path from network B to network A. FIG. 7 shows the restored state. After the path is determined in network A, the path restoration is conducted as "network B → network A" for the following reason. The backup network, i.e., network B is possibly set to an empty state to cope with failure which may occur in network A. However, to prevent excessive operations therebetween, specifically, the change over and the path restoration between network A and network B due to frequent failures, a fixed protection period of time is disposed therebetween.

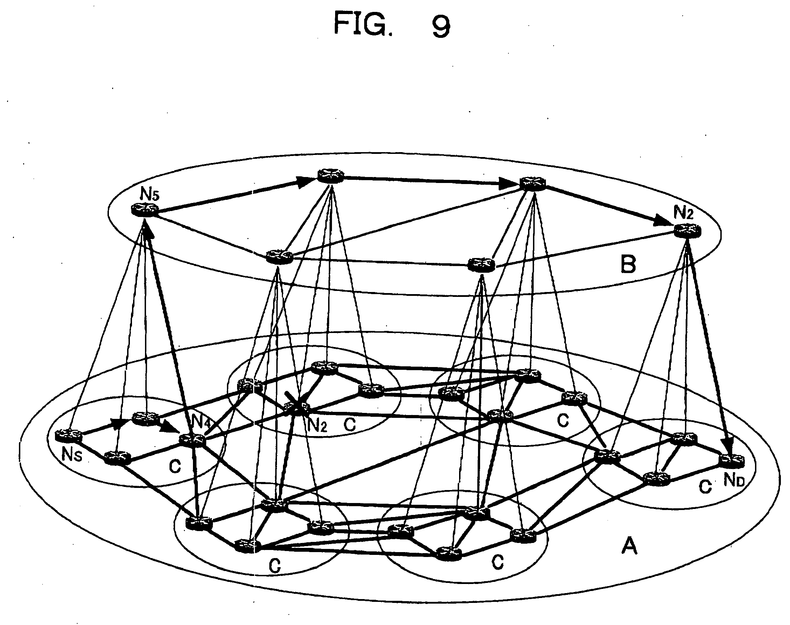

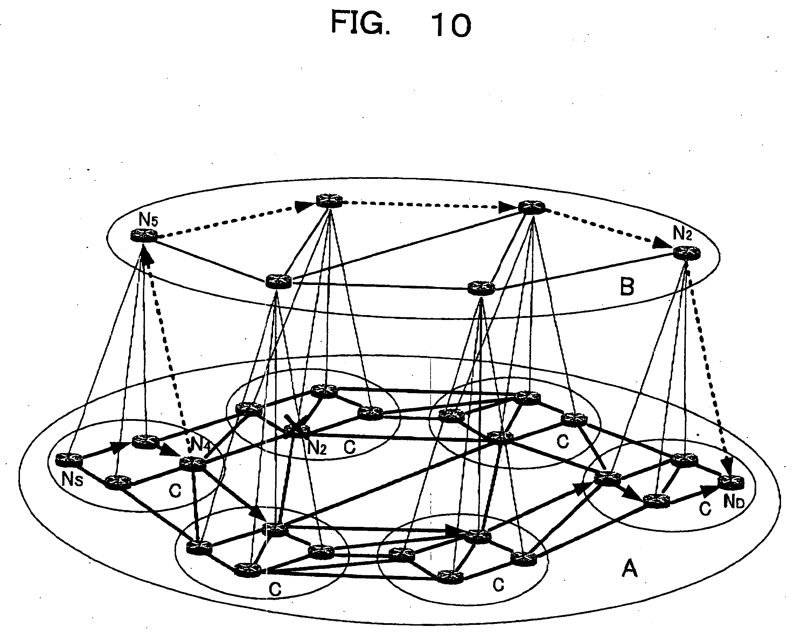

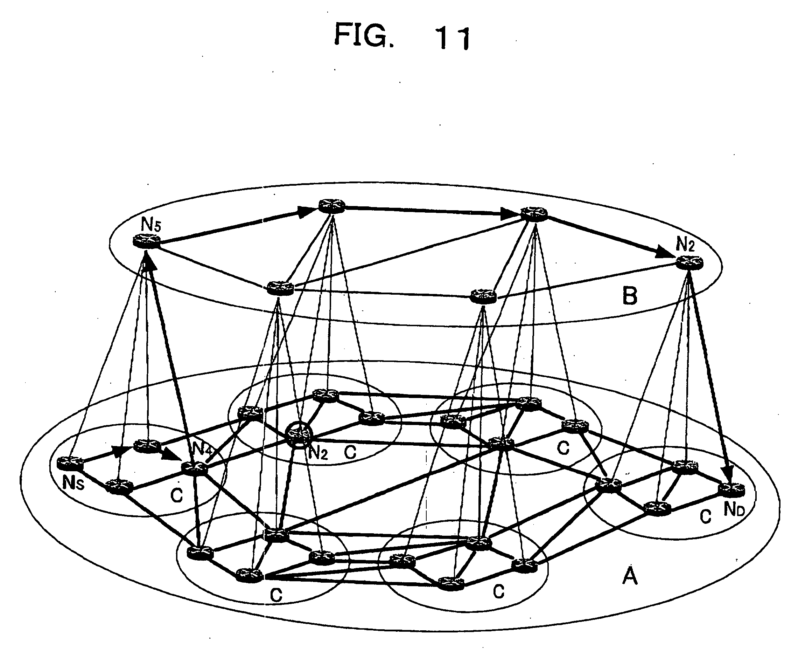

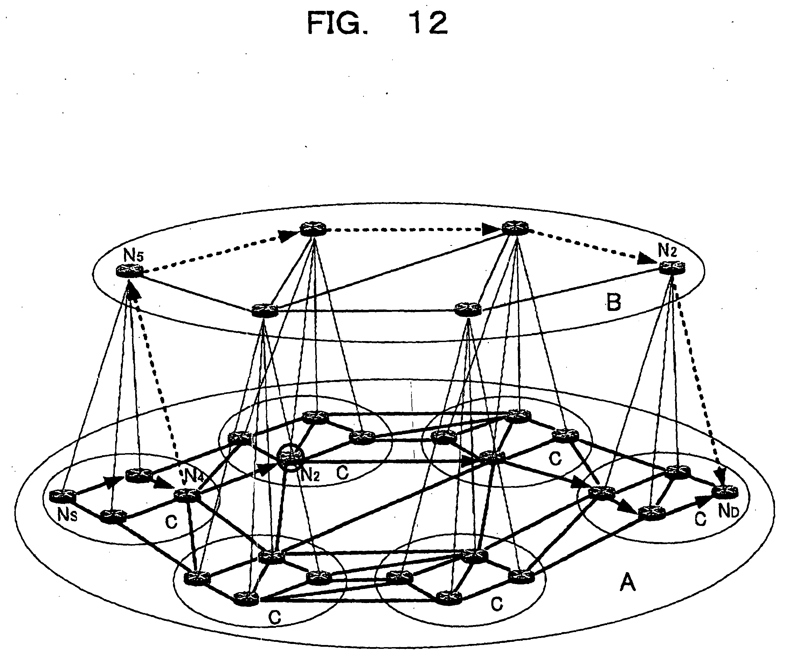

FIGS. 8 to 12 show operations at occurrence of failure in node N2 on the path from node NS to node ND in network A, specifically, a change-over of the path and an operation to restore the path to the original state. FIG. 8 shows an ordinary state in which network A is free of failure. FIG. 9 shows a state in which failure has occurred in node N2. Fig. 9 shows a state in which packets are fed using network B, specifically, a packet is transferred from node N4 to node N5 on network B and then from node N5 to node ND on network A. FIG. 10 shows a state in which a path has been configured on network A. In this state, a packet is delivered from node N4 to a node on network A without employing network B and is then fed to node ND. FIG. 11 shows a state immediately after node N2 is restored. In FIG. 11, a packet is transferred from node N4 to node N5 on network B and then is delivered to node ND. FIG. 12 shows a state after a lapse of a predetermined period of time from the recovery of node N2- In this state, a packet is sent from node N4 to node N2 thus restored and then is fed to node ND without using network B. In this connection, node N4 carries out the change-over and the restoration of the path between the networks A and B.

In the exemplary embodiment of the autonomous network, each node on network A includes switching control software to conduct the change-over or switching and the restoration of the path described above. For this purpose, the software updates a table including a result of routing, i.e., a next transfer destination according to the failure information and the routing information to thereby alter the transfer target. The table corresponds to the forwarding tables 221 and 231 shown in FIG. 2. The table is ordinarily installed in an interface card (the interface sections 22 and 23). FIG. 13 shows a state transition diagram of the switching control software.

Each node on network B operates the routing protocol for the nodes including nodes on network A associated therewith. If OSPF is adopted as the routing protocol, the node conducts hierarchic routing by establishing a correspondence between the groups C on network A and the areas of OSPF. It is resultantly possible to compress the routing table of network B.

As above, if failure or restoration thereof takes place on network A, network B of the autonomous network of the exemplary embodiment is employed to temporarily transmit part of the traffic That is, network B requires a small transfer capacity and hence can be configured as an inexpensive network including a smallest number of necessary devices and transmission paths.

Referring now to FIG. 13, description will be given of the processing flow of the switching control software installed in each node device. The switching control software 112 operates with a fixed period or cycle in the node device. On the basis of the failure information from a physical layer or a data link layer or the information of new transfer targets delivered from the path controller (routine engine), the software 112 updates the forwarding tables 221 and 231 to thereby conduct the switching of the packet transfer target and the restoration thereof.

The switching of the packet transfer target and the restoration thereof are executed by securing a fixed protection time therebetween. The system monitors a change in the routing table 113 and makes a check whether the change continues or stops at least a preset period of time. The routing change or convergence is determined on the basis of the result from the check.

State "S1:without failure, without switching" of FIG. 13 corresponds to FIGS. 3 and 8. State "S1:without failure, without switching"→state "S2:with failure, during switching" corresponds to FIGS. 4 and 9. State "S2:with failure, during switching"→state "S3:with failure, without switching" corresponds to FIGS. 5 and 10. State "S3:with failure, without switching"→state "S4:without failure, during switching" corresponds to FIGS. 6 and 11. State "S4:without failure, during switching"→state "S1:without failure, without switching" corresponds to FIGS. 7 and 12.

In the exemplary embodiment of the autonomous network, a small-sized backup network, i.e., network B is added to network A to economically provide redundancy to the resultant network. At occurrence of failure, the packet route is switched from network A to network B. This makes it possible to restore the communication.

Also, in the exemplary embodiment of the autonomous network, by expanding the size and the transfer capacity of network B, reliability of the network can be improved in proportion to the investment cost for the devices and the transmission paths. Furthermore, since an existing routing protocol is employed in the exemplary embodiment of the autonomous network, it is possible to facilitate migration from network A.

Although network B is a mesh in the above explanation, network B may be formed in the shape of a ring or a bus.

In the exemplary embodiment of the autonomous network, not only when failure occurs on network A, but also when a detour of traffic is required due to, for example, maintenance or replacement of a device or a transmission path, it is also possible to manually change the packet route to network B.

Moreover, in the exemplary embodiment of the autonomous network, network B may be utilized to avoid congestion and to improve Quality Of Service (QoS). For this purpose, the system is configured to set a path switching policy such that the switching control software 112 automatically switches the path according to necessity.

Although a one-to-one interface connection exists between networks A and B in the exemplary embodiment of the autonomous network, the interface may be dispensed with on the side of network B by arranging a line concentrator between networks A and B. Also, the switching control software 112 may be implemented by use of a hardware state machine.

Exemplary embodiments described above are only a favorable embodiment of the present invention, but the present invention is not restricted by the embodiments. The embodiments may be changed and modified by those skilled in the art into various embodiments within the scope and spirit of the present invention.

For example, the control operation in each constituent component of the autonomous network may be carried out using hardware, software, or a combination thereof.

If the processing is executed by software, a program including a processing sequence thereof may be installed in a memory of a computer mounted in hardware dedicated for the processing so that the program is executed by the computer. Or, the program may be installed for execution thereof in a general computer capable of executing various processing.

For example, the program may be beforehand stored in a recording medium such as a hard disk or a Read Only Memory (ROM). Also, the program may be temporarily or permanently stored or recorded in a removable recording medium. The recording medium of this kind may be provided as package software. The removable recording medium may be, for example, a floppy (registered trademark) disk, a Compact Disk Read Only Memory (CD-ROM), a MagnetoOptical (MO) disk, a Digital Versatile Disc (DVD), a magnetic disk, or a semiconductor memory.

The program is then read from the removable recording medium to be installed in a computer. Alternatively, the program is sent wirelessly from a download site to a computer. Or, the program is delivered via a network through wire to a computer.

Furthermore, the exemplary embodiments of the autonomous network may be constructed such that the operation steps are processed in a time-series fashion on the basis of the processing described above or the operation steps are concurrently or individually carried out according to processing capacity of the module which executes the processing or according to necessity.

As described above, the present invention has advantageous aspects as follows.

The autonomous network is an autonomous network in which one and the same routing protocol is employed in the network. The network is constructed in a redundant configuration by adding, to an existing network which is an existing autonomous network, an additional network which is disposed independently of the existing network and which is an autonomous system dedicated to standby or backup routes. When failure occurs in at least one of the node devices and the transmission paths on the existing network, part of the traffic on the existing network is temporarily delivered using the additional network.

The node device is a node device constituting an existing network as an existing autonomous system in which one and the same routing protocol is employed in the network. The node device includes switching control software to control change-over to the additional network at occurrence of failure in at least one of the node device and a transmission path to the node device such that part of the traffic on the transmission path to the node device is temporarily transferred using the additional network which is disposed independently of the existing network and which is an autonomous system dedicated to backup routes.

The network redundancy method is a network redundancy method for use with an autonomous network in which one and the same routing protocol is employed in the network. According to the network redundancy providing method, the network is constructed in redundant structure by adding, to an existing network which is an existing autonomous network, an additional network which is arranged independently of the existing network and which is an autonomous system dedicated to backup routes. At occurrence of failure in at least one of the node devices and the transmission paths on the existing network, part of the traffic on the existing network is temporarily transmitted via the additional network.

That is, the exemplary embodiment of the autonomous network has an aspect in which at occurrence of failure in a node or a link of the autonomous system in which one and the same routing protocol is adopted in the network, the communication is economically restored in a short period of time by use of a combination of the redundant structure and the path change over.

According to the exemplary embodiment of the autonomous network, an autonomous network, i.e., an additional network dedicated to backup routes is added to an existing autonomous network, i.e., an existing network. The node devices on the existing network are classified into groups on the basis of a geographic property, specifically, each group includes node devices which are loaded near to each other. Each group is assigned with one node device on the additional network such that a plurality of node devices on the existing network are coupled with a node device on the additional network.

Specifically, in the autonomous network of the exemplary embodiment, a node device is additionally installed for the additional network and an interface card is installed in each node device on the existing network. The respective node devices on the additional network are connected in the form of a mesh to configure one autonomous system independent of the existing network.

The additional network is employed exclusively for backup routes of the existing network and is economically configured in a small-sized network by possibly reducing the bandwidth and the transfer capacity of the node devices as compared with those of the existing network.

The additional network is arranged to temporarily transfer part of the traffic on the existing network at occurrence of failure or restoration of failure on the existing network and hence requires a limited transfer capacity. Therefore, the additional network includes a minimum number of required devices and transmission paths and is economically constructed.

The exemplary embodiment of the autonomous network is implemented by installing switching control software, which controls the change-over in the redundant network, in each node device of the existing network.

As a result, according to the exemplary embodiment of the autonomous network, by adding a backup small-sized additional network to the existing network, a redundant network is economically implemented. At occurrence of failure, the communication can be restored in a short period of time through a high-speed switching operation.

In the exemplary embodiment of the autonomous network, it is possible, by expanding the size and the transfer capacity of network B, to improve reliability of the network in proportion to the investment cost for the devices and the transmission paths. Since an existing routing protocol is used in the autonomous network, migration from network A can be easily carried out.

The autonomous network, the node device, the network redundancy method, and the recording medium in accordance with the present invention are applicable to various networks.

While the present invention has been described with reference to the particular illustrative embodiments, it is not to be restricted by those embodiments but only by the appended claims.

According to an embodiment, in an autonomous network, one and the same routing protocol is employed in the network. An additional network which is an autonomous system dedicated to backup routes is added to an existing network which is an existing autonomous system, to thereby provide redundancy to the autonomous network. Part of traffic on the existing network is transmitted by use of the additional network. Therefore, at occurrence of failure, communication can be restored in a short period of time in the autonomous network.

## Claims

1. An autonomous network in which a routing protocol is used to route traffic in the autonomous network, comprising:
an existing network being autonomous and having node devices;
an additional network being autonomous, dedicated to backup routes, and added to said existing network to thereby provide redundancy to said autonomous network, wherein part of the traffic on said existing network is transmitted by use of said additional network;
**characterized in that**
each of said node devices of said existing network includes a switching control module for switching to said additional network;
wherein said switching control module is configured to control, at occurrence of failure on said existing network, operation of said autonomous network to conduct a change-over operation to said additional network, or at occurrence of a change in a path on said existing network or of restoration of failure on said existing network, operation of said autonomous network to switch to said additional network.

2. The autonomous network in accordance with claim 1, wherein at occurrence of failure on existing network, part of traffic on the existing network is transmitted by use of the additional network.

3. The autonomous network in accordance with claim 1 or 2, wherein at occurrence of failure on at least one of node devices and transmission paths on the existing network, part of traffic on the existing network is transmitted by use of the additional network.

4. The autonomous network in accordance with one of claims 1 to 3, wherein:
node devices on the existing network are classified into a plurality of groups; and
each of the groups is assigned with a node device on the additional network, to thereby connect the node devices of the groups on the existing network to the node devices on the additional network.

5. The autonomous network in accordance with claim 4, wherein an interface card is added to the node devices on the existing network, to thereby connect the node devices on the existing network to the node devices on the additional network.

6. A node device of the existing network in the autonomous network according to any of the preceding claims is adapted to switch to the additional network to transmit part of traffic on the existing network by use of the additional network.

7. The node device in accordance with claim 6, wherein the node device switches, at occurrence of failure on at least one of the node device itself and transmission paths thereto, to the additional network to transmit part of traffic on the path thereto by use of the additional network,

8. The node device in accordance with claim 6 or 7, further comprising:
a first interface card for connecting to the node device on the existing network; and
a second interface card for connecting to the node device on the additional network.

9. A network redundancy method for use with an autonomous network in which a routing protocol is used to route traffic in said autonomous network, wherein said autonomous network comprises an existing network being autonomous and having node devices, and an additional network being autonomous, dedicated to backup routes, and added to said existing network to thereby provide redundancy to said autonomous network, wherein part of the traffic on said existing network is transmitted by use of said additional network;
**characterized by** the steps of:
switching to said additional network by each of said node devices,
wherein said step of switching by said node device is controlled, at occurrence of failure on said existing network, to conduct a change-over operation to said additional network, or at occurrence of a change in a path on said existing network or of restoration of failure on said existing network, to switch operation of said autonomous network to said additional network.

10. The network redundancy method in accordance with claim 9, wherein at occurrence of failure on existing network, part of traffic on the existing network is transmitted by use of the additional network.

11. The network redundancy method in accordance with claim 9, wherein the node device switches, at occurrence of failure on at least one of the node device itself and transmission paths thereto, to the additional network to transmit part of traffic on the path thereto by use of the additional network.

12. A recording medium having recorded therein a network redundancy computer program adapted to perform all the steps of the method of claim 9 when executed on the autonomous network of claim 1.

13. The recording medium in accordance with claim 12, the recording medium causing the node device to execute, at occurrence of failure on at least one of the node device itself and transmission paths thereto, processing of switching to the additional network to transmit part of traffic on the path thereto by use of the additional network.

## Patentansprüche

1. Autonomes Netzwerk, in welchem ein Routingprotokoll verwendet wird, um Verkehr im autonomen Netzwerk zu routen, umfassend:
ein bestehendes Netzwerk, welches autonom ist und Knotengeräte aufweist;
ein zusätzliches Netzwerk, welches autonom ist, Backup-Routen zugeordnet ist und zum bestehenden Netzwerk hinzugefügt ist, um **dadurch** Redundanz für das autonome Netzwerk bereitzustellen, wobei ein Teil des Verkehrs auf dem bestehenden Netzwerk durch Verwendung des zusätzlichen Netzwerkes übertragen wird;
**dadurch gekennzeichnet, dass**
jedes der Knotengeräte des bestehenden Netzwerkes ein Schaltsteuermodul zum Schalten auf das zusätzliche Netzwerk enthält;
wobei das Schaltsteuermodul dazu eingerichtet ist, bei Auftreten eines Fehlers auf dem bestehenden Netzwerk eine Operation des autonomen Netzwerkes zu steuern, um eine Wechseloperation auf das zusätzliche Netzwerk auszuführen, oder bei Auftreten einer Änderung in einem Pfad des bestehenden Netzwerkes oder bei Restauration eines Fehlers auf dem bestehenden Netzwerk eine Operation des autonomen Netzwerkes zu steuern, um auf das zusätzliche Netzwerk zu schalten.

2. Autonomes Netzwerk nach Anspruch 1, wobei bei Auftreten eines Fehlers auf dem bestehenden Netzwerk ein Teil des Verkehrs auf dem bestehenden Netzwerk durch Verwendung des zusätzlichen Netzwerkes übertragen wird.

3. Autonomes Netzwerk nach Anspruch 1 oder 2, wobei bei Auftreten eines Fehlers auf einem der Knotengeräte und/oder auf Übertragungspfaden des bestehenden Netzwerkes ein Teil des Verkehrs auf dem bestehenden Netzwerk durch Verwendung des zusätzlichen Netzwerkes übertragen wird.

4. Autonomes Netzwerk nach einem der Ansprüche 1 bis 3, wobei:
die Knotengeräte des bestehenden Netzwerkes in eine Mehrzahl von Gruppen eingeteilt sind; und
jede der Gruppen einem Knotengerät des zusätzlichen Netzwerkes zugeordnet ist, um **dadurch** die Knotengeräte der Gruppen des bestehenden Netzwerkes an Knotengeräte des zusätzlichen Netzwerkes anzuschließen.

5. Autonomes Netzwerk nach Anspruch 4, wobei eine Schnittstellenkarte zu den Knotengeräten des bestehenden Netzwerkes hinzugefügt ist, um **dadurch** die Knotengeräte des bestehenden Netzwerkes an die Knotengeräte des zusätzlichen Netzwerkes anzuschließen.

6. Knotengerät des bestehenden Netzwerkes im autonomen Netzwerk gemäß einem der vorhergehenden Ansprüche, das dazu ausgelegt ist, zum zusätzlichen Netzwerk zu schalten, um einen Teil des Verkehrs auf dem bestehenden Netzwerk durch Verwendung des zusätzlichen Netzwerkes zu übertragen.

7. Knotengerät nach Anspruch 6, wobei das Knotengerät bei Auftreten eines Fehlers im Knotengerät selbst und/oder auf Übertragungspfaden dahin auf das zusätzliche Netzwerk schaltet, um einen Teil des Verkehrs auf dem Pfad dahin durch Verwendung des zusätzlichen Netzwerkes zu übertragen.

8. Knotengerät nach Anspruch 6 oder 7, ferner umfassend:
eine erste Schnittstellenkarte zum Anschließen des Knotengerätes an das bestehende Netzwerk; und
eine zweite Schnittstellenkarte zum Anschließen des Knotengerätes an das zusätzliche Netzwerk.

9. Netzwerkredundanzverfahren zur Verwendung mit einem autonomen Netzwerk, in welchem ein Routingprotokoll verwendet wird, um Verkehr auf dem autonomen Netzwerk zu routen, wobei das autonome Netzwerk ein bestehendes Netzwerk, das autonom ist und Knotengeräte aufweist, und ein zusätzliches Netzwerk umfasst, das autonom ist, Backup-Routen zugeordnet ist und zum bestehenden Netzwerk hinzugefügt ist, um **dadurch** Redundanz für das autonome Netzwerk bereitzustellen, wobei ein Teil des Verkehrs auf dem bestehenden Netzwerk durch Verwendung des zusätzlichen Netzwerkes übertragen wird;
**gekennzeichnet durch** die Schritte:
Schalten auf das zusätzliche Netzwerk **durch** jedes der Knotengeräte,
wobei der Schritt des Schaltens **durch** das Knotengerät derart gesteuert wird, bei Auftreten eines Fehlers auf dem bestehenden Netzwerk eine Wechseloperation auf das zusätzliche Netzwerk auszuführen, oder bei Auftreten einer Änderung in einem Pfad des bestehenden Netzwerkes oder bei Restauration eines Fehlers auf dem bestehenden Netzwerk eine Operation des autonomen Netzwerkes auf das zusätzliche Netzwerk zu schalten.

10. Netzwerkredundanzverfahren nach Anspruch 9, wobei bei Auftreten eines Fehlers auf dem bestehenden Netzwerk ein Teil des Verkehrs auf dem bestehenden Netzwerk durch Verwendung des zusätzlichen Netzwerkes übertragen wird.

11. Netzwerkredundanzverfahren nach Anspruch 9, wobei das Knotengerät bei Auftreten eines Fehlers auf dem Knotengerät selbst und/oder auf Übertragungspfaden dahin auf das zusätzliche Netzwerk schaltet, um einen Teil des Verkehrs auf dem Pfad dahin durch Verwendung des zusätzlichen Netzwerkes zu übertragen.

12. Aufzeichnungsmedium, das ein darauf aufgezeichnetes Netzwerkredundanz-Computerprogramm aufweist, das dazu ausgelegt ist, alle Schritte des Verfahrens nach Anspruch 9 durchzuführen, wenn es auf dem autonomen Netzwerk nach Anspruch 1 ausgeführt wird.

13. Aufzeichnungsmedium nach Anspruch 12, wobei das Aufzeichnungsmedium bewirkt, dass das Knotengerät bei Auftreten eines Fehlers auf dem Knotengerät selbst und/oder auf Übertragungspfaden dahin eine Verarbeitung des Schaltens auf das zusätzliche Netzwerk ausführt, um einen Teil des Verkehrs auf dem Pfad dahin durch Verwendung des zusätzlichen Netzwerkes zu übertragen.

## Revendications

1. Réseau autonome dans lequel un protocole d'acheminement est utilisé pour acheminer du trafic dans le réseau autonome, comprenant :
un réseau existant qui est autonome et ayant des dispositifs de noeud ;
un réseau supplémentaire qui est autonome, dédié à des acheminements de secours, et ajouté au dit réseau existant pour fournir de ce fait une redondance au dit réseau autonome, dans lequel une partie du trafic sur ledit réseau existant est transmis par l'utilisation dudit réseau supplémentaire ;
**caractérisé en ce que**
chacun desdits dispositifs de noeud dudit réseau existant comprend un module de commande de commutation pour commuter sur ledit réseau supplémentaire ;
dans lequel ledit module de commande de commutation est configuré pour commander, à une survenance d'une défaillance sur ledit réseau existant, le fonctionnement dudit réseau autonome pour effectuer une opération de changement sur ledit réseau supplémentaire, ou à une survenance d'un changement d'un chemin sur ledit réseau existant ou d'une reprise après une défaillance sur ledit réseau existant, le fonctionnement dudit réseau autonome pour commuter sur ledit réseau supplémentaire.

2. Réseau autonome selon la revendication 1, dans lequel, à une survenance d'une défaillance sur le réseau existant, une partie du trafic sur le réseau existant est transmise par l'utilisation du réseau supplémentaire.

3. Réseau autonome selon la revendication 1 ou 2, dans lequel à une survenance d'une défaillance sur au moins l'un des dispositifs de noeud et des chemins de transmission sur le réseau existant, une partie du trafic sur le réseau existant est transmise par l'utilisation du réseau supplémentaire.

4. Réseau autonome selon l'une des revendications 1 à 3, dans lequel :
des dispositifs de noeud sur le réseau existant sont classifiés en une pluralité de groupes ; et
à chacun des groupes, il est assigné un dispositif de noeud sur le réseau supplémentaire, pour connecter de ce fait les dispositifs de noeud des groupes sur le réseau existant aux dispositifs de noeud sur le réseau supplémentaire.

5. Réseau autonome selon la revendication 4, dans lequel une carte d'interface est ajoutée aux dispositifs de noeud sur le réseau existant, pour connecter de ce fait les dispositifs de noeud sur le réseau existant aux dispositifs de noeud sur le réseau supplémentaire.

6. Dispositif de noeud du réseau existant dans le réseau autonome selon l'une quelconque des revendications précédentes, qui est apte à commuter sur le réseau supplémentaire pour transmettre une partie du trafic sur le réseau existant par l'utilisation du réseau supplémentaire.

7. Dispositif de noeud selon la revendication 6, dans lequel le dispositif de noeud commute, à une survenance d'une défaillance sur au moins l'un du dispositif de noeud proprement dit et des chemins de transmission à celui-ci, sur le réseau supplémentaire pour transmettre une partie du trafic sur le chemin à celui-ci par l'utilisation du réseau supplémentaire.

8. Dispositif de noeud selon la revendication 6 ou 7, comprenant en outre :
une première carte d'interface pour la connexion au dispositif de noeud sur le réseau existant ; et
une deuxième carte d'interface pour la connexion au dispositif de noeud sur le réseau supplémentaire.

9. Procédé de redondance de réseau destiné à être utilisé avec un réseau autonome dans lequel un protocole d'acheminement est utilisé pour acheminer du trafic dans ledit réseau autonome, dans lequel ledit réseau autonome comprend un réseau existant qui est autonome et ayant des dispositifs de noeud ; et un réseau supplémentaire qui est autonome, dédié à des acheminements de secours, et ajouté au dit réseau existant pour fournir de ce fait une redondance au dit réseau autonome, dans lequel une partie du trafic sur ledit réseau existant est transmise par l'utilisation dudit réseau supplémentaire ;
**caractérisé par** l'étape consistant à :
commuter sur ledit réseau supplémentaire par chacun desdits dispositifs de noeud ;
dans lequel ladite étape de commutation par ledit dispositif de noeud est commandée, à une survenance d'une défaillance sur ledit réseau existant, pour effectuer une opération de changement sur ledit réseau supplémentaire, ou à une survenance d'un changement d'un chemin sur ledit réseau existant ou d'une reprise après une défaillance sur ledit réseau existant, pour commuter le fonctionnement dudit réseau autonome sur ledit réseau supplémentaire.

10. Procédé de redondance de réseau selon la revendication 9, dans lequel à une survenance d'une défaillance sur le réseau existant, une partie du trafic sur le réseau existant est transmise par l'utilisation du réseau supplémentaire.

11. Procédé de redondance de réseau selon la revendication 9, dans lequel le dispositif de noeud commute, à une survenance d'une défaillance sur au moins l'un du dispositif de noeud proprement dit et des chemins de transmission vers celui-ci, sur le réseau supplémentaire pour transmettre une partie du trafic sur le chemin vers celui-ci par l'utilisation du réseau supplémentaire.

12. Support d'enregistrement sur lequel est enregistré un programme informatique de redondance de réseau apte à effectuer toutes les étapes du procédé selon la revendication 9 lorsqu'il est exécuté sur le réseau autonome selon la revendication 1.

13. Support d'enregistrement selon la revendication 12, le support d'enregistrement amenant le dispositif de noeud à exécuter, à une survenance d'une défaillance sur au moins l'un du dispositif de noeud proprement dit et des chemins de transmission vers celui-ci, un traitement de commutation sur le réseau supplémentaire pour transmettre une partie du trafic sur le chemin vers celui-ci par l'utilisation du réseau supplémentaire.
